## Europäisches Patentamt

## European Patent Office

## Office européen des brevets

(19)

(11) **EP 1 063 340 B1**

## (12) EUROPÄISCHE PATENTSCHRIFT

(45) Veröffentlichungstag und Bekanntmachung des Hinweises auf die Patenterteilung:
**19.05.2004 Patentblatt 2004/21**

(51) Int Cl.[7]: **D06F 39/00**, G01N 13/02

(21) Anmeldenummer: **00112988.1**

(22) Anmeldetag: **21.06.2000**

(54) **Verfahren zur Bestimmung der Konzentration eines Waschmittels, Verfahren zum Dosieren von Waschmittel und Waschmaschine zur Durchführung solcher Verfahren**

Method for determining the detergent concentration, method for dosing detergents and washing machine for using these methods

Procédé pour déterminer la concentration en produit détergent, procédé pour doser les détergents et machine à laver utilisant ces procédés

(84) Benannte Vertragsstaaten:
**AT BE CH CY DE DK ES FI FR GB GR IE IT LI LU MC NL PT SE**

(30) Priorität: **22.06.1999 DE 19928390
22.06.1999 DE 19928388**

(43) Veröffentlichungstag der Anmeldung:
**27.12.2000 Patentblatt 2000/52**

(73) Patentinhaber: **Miele & Cie. KG
33332 Gütersloh (DE)**

(72) Erfinder:
- **Dietz, Walter
33332 Gütersloh (DE)**
- **Herden, Rudolf
33442 Herzebrock (DE)**

(56) Entgegenhaltungen:
**EP-A- 0 760 472       WO-A-96/18877
DE-A- 4 112 417       DE-C- 19 636 644
DE-C- 19 755 291      US-A- 4 527 421**

## Beschreibung

Die Erfindung betrifft ein Verfahren zur Bestimmung der Konzentration eines Waschmittels, welches Tenside oder oberflächenaktive Substanzen enthält, in einer wässrigen Waschflüssigkeit (Waschlauge) durch Messung der Oberflächenspannung der Flüssigkeit nach der Blasendruckmethode. Darüber hinaus betrifft die Erfindung ein Verfahren zum Dosieren von Waschmittel, welches Tenside oder oberflächenaktive Substanzen enthält, in eine aus einem Wasser-Waschmittelgemisch bestehende Waschflüssigkeit (Waschlauge), die sich im Laugenbehälter einer Waschmaschine befindet. Außerdem betrifft die Erfindung eine Waschmaschine zur Durchführung mindestens eines der vorgenannten Verfahren.

Es besteht seit langem der Wunsch, die im gewerblichen Bereich und in Haushaltswaschmaschinen angewandten Waschverfahren hinsichtlich ihres Waschmittelverbrauchs unter Berücksichtigung ökologischer und ökonomischer Gesichtspunkte zu optimieren. Um diese Ziele zu erreichen, sind Dosierverfahren notwendig, welche für den jeweiligen Waschprozess eine optimale Waschmittelkonzentration gewährleisten, die einerseits ein zufriedenstellendes Waschergebnis sichert und andererseits eine Überdosierung ausschließt. Aus der DE 41 12 417 A1 und aus der DE 195 29 787 A1 ist es bekannt, die Waschmittelkonzentration in einem Waschmittel-Wassergemisch (Waschlauge) durch eine Messung der Oberflächenspannung zu ermitteln. Dabei erfolgt die Messung in beiden Fällen mit einem Blasentensiometer.

Die Messung der dynamischen Oberflächenspannung nach der Blasendruckmethode basiert auf der Abhängigkeit der Oberflächenspannung vom Druck bei der Bildung freier Oberflächen. Dabei wird an einer Kapillaren über einen kontinuierlich anliegenden Luftstrom eine Blase in der Waschlauge erzeugt. Die Druckdifferenz der sich bildenden und abreißenden Blase ist dann proportional zur Oberflächenspannung. Bei diesem Verfahren muss jedoch die Konzentrations-Oberflächenspannungskennlinie des verwendeten Waschmittels bekannt sein, um bei einer bestimmten Blasenbildungsfrequenz auf die tatsächliche Tensidkonzentration schließen zu können. Da insbesondere in Haushaltswaschmaschinen mehrere verschiedene Waschmittel verwendet werden und der Benutzer in seiner Wahl nicht eingeschränkt werden soll, ist ein solches Verfahren bei Waschmaschinen nicht anwendbar.

Um diesem Problem zu begegnen, werden sowohl in der DE 41 12 417 A1 als auch in der DE 195 29 787 A1 Änderungen der Waschmittelwirkung bzw. der Oberflächenspannung betrachtet. Dabei müssen bis zum Erreichen der optimalen Waschmittelkonzentration eine Vielzahl von Dosier- und Messschritten vorgenommen werden, die den Waschvorgang sehr stark in die Länge ziehen.

Der Erfindung stellt sich somit das Problem, ein Verfahren zur Bestimmung einer Waschmittelkonzentration der eingangs genannten Art zu offenbaren, mit dem unabhängig vom verwendeten Waschmittel bereits nach einer ersten Messung eine Aussage über die Beschaffenheit einer Waschlauge möglich ist. Erfindungsgemäß wird dieses Problem durch ein Verfahren mit den im Patentanspruch 1 angegebenen Merkmalen gelöst. Vorteilhafte Ausgestaltungen und Weiterbildungen dieses Verfahrens ergeben sich aus den nachfolgenden Unteransprüchen.

Außerdem liegt der Erfindung das Problem zugrunde, ein Verfahren zum Dosieren von Waschmittel in eine aus einem Wasser-Waschmittelgemisch bestehende Waschflüssigkeit (Waschlauge) dahingehend zu verbessern, dass mit nur wenigen Dosier- und Messschritten eine optimale Waschmittelkonzentration für das jeweils durchgeführte Waschprogramm erreicht wird. Erfindungsgemäß wird dieses Problem durch ein Verfahren mit den im Patentanspruch 5 angegebenen Merkmalen gelöst. Vorteilhafte Ausgestaltungen und Weiterbildungen dieses Verfahrens ergeben sich aus den nachfolgenden Unteransprüchen..

Durch eine Waschmaschine mit den im Patentanspruch 10 angegebenen Merkmalen wird eine Waschmaschine zur Durchführung der beiden vorgenannten Verfahren offenbart. Vorteilhafte Ausführungsformen dieser Waschmaschine ergeben sich aus dem nachfolgenden Unteranspruch.

Durch unterschiedliche Waschmitteldosierungen in der Waschlauge wird nicht nur der Absolutwert der Oberflächenspannung, sondern auch der Verlauf der Oberflächenspannungs-Blasenbildungsfrequenz-Kennlinie beeinflusst. Dies beruht auf der Wirkung der Tenside:

Bei der Bildung von Blasen müssen die Tenside den hierdurch gebildeten freien Oberflächen folgen und die Zwischenräume der Wassermoleküle besetzen. Da die Tenside sehr groß sind, kann dies nur langsam erfolgen, so dass bei größeren Blasenbildungsfrequenzen nicht sofort alle freien Oberflächen besetzt werden. Deshalb steigt mit zunehmender Blasenbildungsfrequenz die gemessene Oberflächenspannung und geht bei sehr hohen Frequenzen gegen den Wert von reinem Wasser. Darüber hinaus ist die Schnelligkeit der Besetzung der Zwischenräume von der Tensidkonzentration abhängig. Je mehr Tenside vorhanden sind, desto schneller werden Zwischenräume besetzt. Aus diesem Grund steigt bei niedrigen Tensidkonzentrationen die Oberflächenspannung mit zunehmender Blasenbildungsfrequenz wesentlich schneller als bei hohen Konzentrationen. Ist ab einer gewissen Blasenbildungsfrequenz die Zeit für die Blasenbildung kleiner als die Zeit zur Überwindung der mittleren Weglänge, besetzt nur noch ein geringer Anteil der Tenside in der Nachbarschaft der Blasen die Zwischenräume. Die Oberflächenspannungs-Blasenbildungsfrequenz-Kennlinie ist deshalb im Bereich von 1 Hz bis 10 Hz stark gekrümmt. Ist die Tensidkonzentration dagegen sehr hoch, wird die Anzahl der Tenside, die die Zwischenräume besetzen, nur von der Blasenbildungsfrequenz beeinflusst. Alle Tenside, deren mittlere Weglänge im Zeitfenster der Blasenbildungsfrequenz liegen, besetzen die Oberfläche der Blase. Dadurch entsteht ein linearer Verlauf der Oberflächenspannungs-Blasenbildungsfrequenz-Kennlinie im Bereich von 1 Hz bis 10 Hz. Das Phänomen, dass mit zunehmender Blasenbildungsfrequenz die gemessene Oberflächenspannung gegen den Wert von reinem Wasser geht, kann auch zur schnellen Kalibrierung des Messsystems benutzt werden.

Durch das erfindungsgemäße Dosierverfahren kann zunächst vom Benutzer der Waschmaschine eine beliebige Grunddosierung eines von ihm gewählten und für die jeweilige Wäscheart passenden Waschmittels vorgenommen werden. Anschließend wird eine erforderliche Menge Flüssigwaschmittel aus einem Vorratsbehälter bis zum Erreichen der für das Waschprogramm optimalen Waschmittelkonzentration nachdosiert. Die Oberflächenspannung wird in erster Linie von den Tensiden in den Waschmitteln beeinflusst. Flüssigwaschmittel haben einen sehr hohen Tensidanteil und eignen sich deshalb gut, um bis zur gewünschten Oberflächenspannung nachzudosieren. Da sie keine Bleichzusätze haben, sind sie für fast alle Textilarten verwendbar. Die Notwendigkeit von Vorratsspeichern für unterschiedliche Waschmittel entfällt deswegen.

Alternativ zu einer Grunddosierung mit Festwaschmittel durch den Benutzer kann auch im ersten Dosierschritt bereits eine vollautomatische Dosierung eines Flüssigwaschmittels aus einem Vorratsbehälter erfolgen.

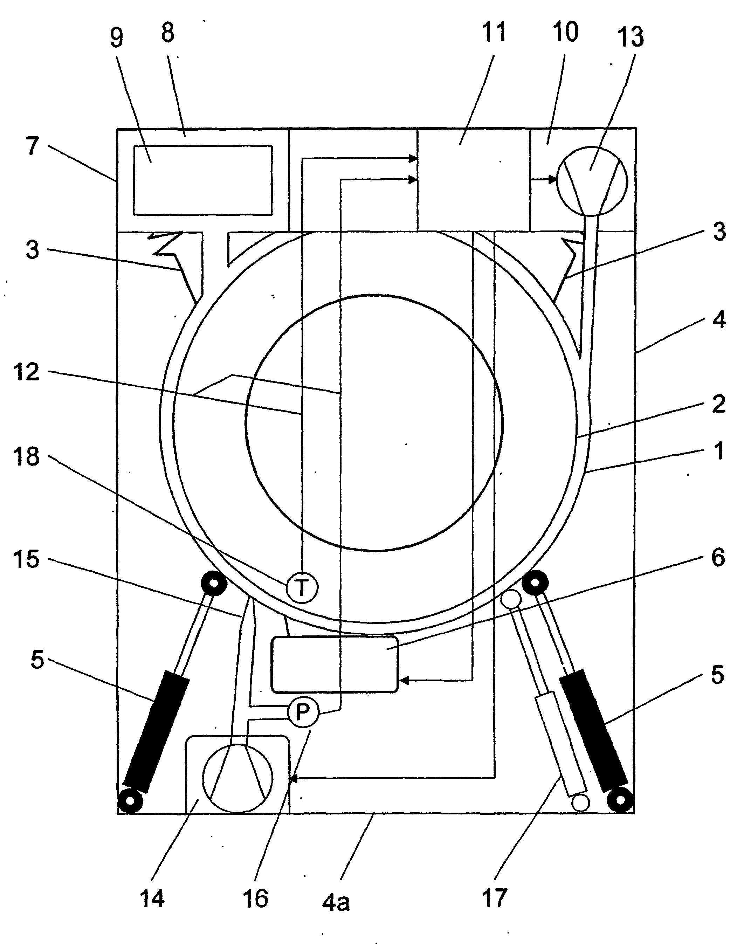

Ein Ausführungsbeispiel einer erfindungsgemäß ausgebildeten Waschmaschine ist in einer Zeichnung rein schematisch dargestellt und wird nachfolgend näher beschrieben. Die Figur zeigt die Prinzipskizze einer Waschmaschine, welche zur Durchführung des erfindungsgemäßen Bestimmungsverfahrens und des erfindungsgemäßen Dosierverfahrens geeignet ist. Die dargestellte Waschmaschine besitzt einen Laugenbehälter (1), in dem eine Trommel (2) zur Aufnahme von Wäsche drehbar gelagert ist. Der Laugenbehälter (1) ist an Federn (3) schwingbeweglich im Gehäuse (4) aufgehängt und wird zur Dämpfung dieser Schwingungen im unteren Bereich durch Stoßdämpfer (5) gegenüber dem Gehäuseboden (4a) abgestützt. Die Trommel (2) wird durch einen Motor (6) in reversierende Drehbewegungen versetzt.

Im Bereich der Bedienblende (7) ist ein Waschmitteleinspülkasten (8) mit einer Waschmittelschublade (9) für die manuelle Zugabe von Wäschebehandlungsmitteln vorgesehen. Diese werden nach dem Programmstart unter Zuleitung von Wasser in den Laugenbehälter (1) eingespült. Im oberen Bereich der Maschine ist außerdem ein Vorratsbehälter (10) angeordnet, der zur Aufnahme einer größeren Menge Flüssigwaschmittel für mehrere Waschprogramme ausreicht. Die Anordnung in der Maschine und zusätzlich vorhandene Einrichtungen zur Füllstandsüberwachung des Vorratsbehälters und zur Einleitung des Flüssigwaschmittels in den Laugenbehälter (1) können beispielsweise in einer aus der DE 39 01 686 A1 bekannten Art und Weise ausgebildet sein und sind deshalb hier nicht näher beschrieben.

Zur Steuerung der verschiedenen Waschprogramme ist eine Mikroprozessor-Steuerung (11) vorgesehen, die über Signalleitungen (12) mit verschiedenen Messeinrichtungen und Bedienelementen verbunden ist. Sie gibt zeit- und zustandsabhängige Befehle über Steuerleitungen an verschiedene Aktoren, insbesondere an den Motor (6), nicht dargestellte Ventile zur Einleitung von Wasser in den Waschmitteleinspülkasten (8), an eine Dosierpumpe (13) im Vorratsbehälter (10) und an eine nachfolgend beschriebene Luft-Volumenstromquelle in Form einer Luftpumpe (14) mit änderbarer Pumpleistung weiter.

Unter den Messgebem der erfindungsgemäß ausgebildeten Waschmaschine befindet sich eine Einrichtung zur Bestimmung der Konzentration des Waschmittels in der Waschlauge. Diese Einrichtung misst die Oberflächenspannung der Waschlauge nach der Blasendruckmethode. Zu diesem Zweck wird in die Waschlauge im Laugenbehälter (1) oder in eine mit Waschlauge gefüllte Messzelle über eine Kapillare (15) ein Luftstrom eingeleitet, der von der Luftpumpe (14) erzeugt wird. Dieser Luftstrom verursacht in der Waschlauge eine Bildung von Luftblasen. Dabei kann die Pumpleistung durch die Mikroprozessor-Steuerung (11) derart variiert werden, dass die Blasenbildungsfrequenz sich über eine Bandbreite von 1Hz bis 20 Hz ändert. Mit einem Drucksensor (16) oder mit einem Schalldruckwandler (nicht dargestellt) wird kontinuierlich die erste Ableitung des entstehenden Drucks während des Blasenabrisses in ein elektrisches Signal umgewandelt und vom Steuerrechner der Mikroprozessor-Steuerung (11) in Oberflächenspannungswerte umgerechnet. Auf diese Weise werden von der Mikroprozessor-Steuerung (11) für den Frequenzbereich von 1 Hz bis 10 Hz in Abständen von 1 Hz Oberflächenspannungswerte gespeichert. Die Ermittlung der Oberflächenspannungs-Blasenbildungsfrequenz-Kennlinie kann entweder durch Regelung der Blasenbildungsfrequenz auf die gewünschten Werte oder durch ein Approximationsverfahren erfolgen, bei dem eine Näherungskurve durch gemessene Oberflächenspannungswerte bei beliebigen zugehörigen Blasenbildungsfrequenzen gelegt wird.

Als weiterer Messgeber ist ein Gewichtssensor (17) vorhanden, mit dem die Beladungsmenge der Trommel (2) ermittelt werden kann. Als Sensor wird in bekannter Weise ein parallel zum Stoßdämpfer angeordneter Lagesensor verwendet, mit welchem die gewichtsabhängige Laugenbehälter-Höhenlage erfasst wird. Andere Gewichtssensoren, beispielsweise Dehnungsmessstreifen, können ebenfalls verwendet werden. Der statische Anteil des Lagesensor-Signals wird von der Mikroprozessor-Steuerung zur Bestimmung des Wäschegewichts ausgewertet. Anstelle des Gewichtssensors (17) kann eine aus der DE 44 38 760 A1 bekannte Vorrichtung zur Ermittlung einer von der Wäscheart und der Wäschemenge abhängigen Beladungsstufe oder ein vom Benutzer einzugebender Gewichtswert verwendet werden.

Durch einen dritten Messgeber (18) wird die Temperatur der Waschlauge während der Bestimmung der Waschmittelkonzentration gemessen.

Im folgenden ist das oberflächenspannungsabhängige Dosierverfahren beschrieben:

Nach dem Einfüllen der Wäsche in die Trommel wird zunächst nach einem aus der DE 199 06 348 A1 bekannten Verfahren das Wäschegewicht ermittelt. Anschließend gibt der Benutzer ca. 50% der vom Hersteller empfohlenen Waschmittelmenge in die Waschmittelschublade und startet das gewünschte Waschprogramm. Hierdurch wird die Trommel über den Motor in reversierende Drehbewegungen versetzt und das Waschmittel unter Einleitung von Wasser in den Laugenbehälter eingespült. Nachdem der Wasserstand im Laugenbehälter ein für das eingestellte Programm vorgeschriebenes Niveau erreicht hat, erfolgt eine Kalibration der Messeinrichtung zur Ermittlung der Oberflächenspannung. Dabei werden Luftblasen mit einer hohen Blasenbildungsfrequenz von ca. 20 Hz in die Waschlauge eingeleitet und die sich einstellende Oberflächenspannung ermittelt.

Danach folgt die erste Bestimmung der Waschmittelkonzentration. Hierzu wird nach dem vorbeschriebenen Verfahren die Oberflächenspannungs-Blasenbildungsfrequenz-Kennlinie aufgenommen. Während der Erfassung der zehn Oberflächenspannungswerte $OS_i$ wird jeweils die Temperatur $T_{OSi}$ gemessen und ebenfalls abgespeichert. Der Steuerrechner der Mikroprozessor-Steuerung errechnet aus den Oberflächenspannungswerten $OS_i$ einen der Linearität der Oberflächenspannungs-Blasenbildungsfrequenz-Kennlinie entsprechenden Index $I_1$ (Schritt 1) als Maß für die Waschmittelkonzentration. Die Berechnung der Linearität kann durch geeignete statistische Verfahren erfolgen. Der Wert $I_1$ wird nach der Formel

$$I_{K1} = I_1 - K \cdot (T_M - 20)$$

$$T_M = 1/10 \cdot \sum_{i=1}^{10} T_{OS_i}$$

auf eine Temperatur von 20 °C kompensiert (Schritt 2). Hierbei bedeutet $T_M$ die mittlere Temperatur, $T_{OSi}$ die gemessenen Temperaturen bei i Hz, $I_K$ ist der korrigierte Index.

Der gemessene und korrigierte Index $I_{K1}$ dient als Kriterium, um eine Entscheidung über die Zudosierung von Flüssigwaschmittel aus dem Vorratsbehälter zu treffen. Die Zudosierung erfolgt, wenn $I_{K1}$ kleiner als 0,95 ist. Bei der Bestimmung der Menge des zudosierten Waschmittels wird die Beladungsmenge berücksichtigt (Schritt 3):

$$Z_u = \frac{1 + m_B - I_{K_I}}{C}$$

wobei $Z_u$ die Menge des zudosierten Waschmittels, $m_B$ ein beladungsabhängiger Faktor und C eine Konstante ist. Für die Einschaltzeit der Dosierpumpe gilt:

$$t_{P1} = Z_u / p_V$$

(pV = Volumenleistung der Dosierpumpe) (Schritt 4).

Nach dem Zudosieren wird das Waschmittel durch Reversieren der Trommel vermischt. Anschließend wird erneut ein Index $I_{K2}$ durch die Schritte 1 und 2 bestimmt und davon abhängig eine zweite Menge des Flüssigwaschmittels nachdosiert. Entscheidend für die zweite, nachdosierte Menge ist die Indexänderung von $I_{K1}$ nach $I_{K2}$. Für die Einschaltzeit $t_{P2}$ der Pumpe gilt dann:

$$t_{P2} = t_{P1} \cdot \frac{(1 - I_{K2})}{(I_{K2} - I_{K1})}$$

Hierdurch werden Unterschiede in der Beschaffenheit des Flüssigwaschmittels, insbesondere im Tensidgehalt, ausgeglichen und müssen bei der Berechnung der Einschaltzeiten der Pumpe nicht berücksichtigt werden. Eine manuelle Umstellung der Dosiermenge bei einem Wechsel des Waschmittels ist somit unnötig.

**Patentansprüche**

1. Verfahren zur Bestimmung der Konzentration eines Waschmittels, welches Tenside oder oberflächenaktive Substanzen enthält, in einer wässrigen Waschflüssigkeit durch Messung der Oberflächenspannung der Waschflüssigkeit nach der Blasendruckmethode,
   **dadurch gekennzeichnet,**
   **dass** die Oberflächenspannung nach der Blasendruckmethode bei verschiedenen Blasenbildungsfrequenzen gemessen wird, woraus eine Kennlinie von Oberflächenspannungswerten bei verschiedenen Blasenbildungsfrequenzen als Maß für die Konzentration des Waschmittels in der wässrigen Waschflüssigkeit ermittelt wird, welche als Kriterium für eine ausreichende Dosierung des Waschmittels herangezogen wird.

**2.** Verfahren zur Bestimmung der Waschmittelkonzentration nach Anspruch 1,
**dadurch gekennzeichnet,**
**dass** ein der Linearität der Oberflächenspannungs-Blasenbildungsfrequenz-Kennlinie entsprechender Index als Maß für eine Waschmittelkonzentration ermittelt wird.

**3.** Verfahren zur Bestimmung der Waschmittelkonzentration nach Anspruch 2,
**dadurch gekennzeichnet,**
**dass** die Oberflächenspannungs-Blasenbildungsfrequenz-Kennlinie bei einer Blasenbildungsfrequenz zwischen 1 Hz und 10 Hz ermittelt wird.

**4.** Verfahren zur Bestimmung der Waschmittelkonzentration nach mindestens einem der Ansprüche 2 bis 3,
**dadurch gekennzeichnet,**
**dass** vor der Ermittlung der Oberflächenspannungs-Blasenbildungsfrequenz-Kennlinie eine Kalibrierung einer Messeinrichtung (16) zur Ermittlung der Druckdifferenz beim Blasenabriss des in die Waschflüssigkeit geleiteten Volumenstroms durch Einleitung eines Gasstroms mit hoher Blasenbildungsfrequenz von ca. 20 Hz erfolgt.

**5.** Verfahren zum Dosieren von Waschmittel, welches Tenside oder oberflächenaktive Substanzen enthält, in eine aus einem Wasser-Waschmittelgemisch bestehende Waschflüssigkeit, die sich im Laugenbehälter (1) einer Waschmaschine befindet, **gekennzeichnet durch** folgende Verfahrensschritte:

- Bestimmen der Waschmittelkonzentration nach mindestens einem der Ansprüche 2 bis 4 **durch** Ermitteln eines der Linearität der Oberflächenspannungs-Blasenbildungsfrequenz-Kennlinie entsprechenden Indexes;
- Zudosieren einer von diesem Index abhängigen zweiten Menge eines Waschmittels in die Waschflüssigkeit.

**6.** Verfahren zum Dosieren von Waschmittel nach Anspruch 5,
**dadurch gekennzeichnet,**
**dass** nach dem Zudosieren der zweiten Menge

- eine Mischzeit;
- ein erneutes Bestimmen der Waschmittelkonzentration nach mindestens einem der Ansprüche 2 bis 4 durch Ermitteln eines der Linearität der Oberflächenspannungs-Blasenbildungsfrequenz-Kennlinie entsprechenden Indexes;
- und ein von diesem Index abhängiges Nachdosieren einer dritten Menge des Waschmittels erfolgt.

**7.** Verfahren zum Dosieren von Waschmittel nach mindestens einem der Ansprüche 5 oder 6,
**dadurch gekennzeichnet,**
**dass** als zu- bzw. nachdosiertes Waschmittel ein Flüssigwaschmittel verwendet wird.

**8.** Verfahren zum Dosieren von Waschmittel nach mindestens einem der Ansprüche 5 bis 7,
**dadurch gekennzeichnet,**
**dass** bei der Bestimmung der zu-/nachdosierten Menge Waschmittels die Menge der zu waschenden Wäsche berücksichtigt wird.

**9.** Verfahren zum Dosieren von Waschmittel nach Anspruch 5 oder 6,
**dadurch gekennzeichnet,**
**dass** bei der Bestimmung der zu-/nachdosierten Menge Waschmittels die Temperatur der Waschflüssigkeit berücksichtigt wird.

**10.** Waschmaschine zur Durchführung eines Verfahrens nach mindestens einem der Ansprüche 1 bis 9, **gekennzeichnet durch** eine Vorrichtung (14; 15) zur Einleitung eines Luftstromes mit einer in einem vorbestimmten Bandbereich änderbaren Blasenbildungsfrequenz in die Waschflüssigkeit, **durch** eine Messeinrichtung (16) zur Ermittlung der Druckdifferenz beim Blasenabriss des in die Waschflüssigkeit geleiteten Volumenstroms bei verschiedenen Blasenbildungsfrequenzen nach der Blasendruckmethode, und **durch** eine Steuereinrichtung (11) zur Ermittlung einer Kennlinie von Oberflächenspannungswerten bei verschiedenen Blasenbildungsfrequenzen als Maß für die Konzentration des Waschmittels in der wässrigen Waschflüssigkeit und damit als Kriterium für eine ausreichende Dosierung des Waschmittels.

**11.** Waschmaschine nach Anspruch 10,
**gekennzeichnet durch** einen Vorratsbehälter (10) zur Aufnahme des zweiten Waschmittels und **durch** eine von der Steuereinrichtung (11) in Abhängigkeit von der ermittelten Waschmittelkonzentration steuerbare Dosiereinrichtung (13) zur Einleitung des zu- bzw. nachdosierten Waschmittels aus dem Vorratsbehälter (10) in den Laugenbehälter (1).

**Claims**

**1.** Method for determining the concentration of a detergent, which contains tenside or surface-active substances, in an aqueous washing liquid through measurement of the surface tension of the washing liquid in accordance with the bubble pressure method, **characterised in that** the surface tension is measured in accordance with the bubble pressure method at different bubble forming frequencies, a characteristic curve of surface tension values at different bubble forming frequencies being determined as measurement for the concentration of the detergent in the aqueous washing liquid, which characteristic curve is used as criterion for an adequate dosing of the detergent.

2. Method for determining the concentration of a detergent according to claim 1, **characterised in that** an index which corresponds to the linearity of the characteristic curve of the surface tension - bubble forming frequency is determined as measurement for a detergent concentration.

3. Method for determining the concentration of a detergent according to claim 2, **characterised in that** the characteristic curve of the surface tension bubble forming frequency is determined at a bubble forming frequency between 1 Hz and 10 Hz.

4. Method for determining the concentration of a detergent according to at least one of claims 2 to 3, **characterised in that** before the characteristic line of the surface tension bubble forming frequency is determined, a calibration of a measuring device (16) is effected for determining the pressure difference, at the destruction of the bubble, of the volume flow, conducted into the washing liquid, by means of introducing a flow of gas at a high bubble forming frequency of approximately 20 Hz.

5. Method for dosing detergent, which contains tenside or surface-active substances, into a washing liquid which consists of a water-detergent mixture and is situated in the washing liquid bath (1), **characterised by** the following method steps:

   • Determining the concentration of the detergent according to at least one of claims 2 to 4 by means of determining an index, which corresponds to the linearity of the characteristic curve of the surface tension bubble forming frequency;
   • Adding a second amount of a detergent into the washing liquid, said second amount being dependent on this index.

6. Method for the dosing of detergent according to claim 5, **characterised in that** after adding the second amount, there is

   • a mixing time;
   • another determining of the concentration of detergent according to at least one of claims 2 to 4 by means of determining an index, which corresponds to the linearity of the characteristic curve of the surface tension bubble forming frequency;

   • and a subsequent dosing of a third amount of the detergent, which is dependent on this index.

7. Method for dosing detergent according to at least one of claims 5 or 6, **characterised in that** a liquid detergent is used as the additional or respectively subsequently dosed detergent.

8. Method for dosing detergent according to at least one of claims 5 to 7, **characterised in that** when determining the additional/subsequent amount of detergent, the amount of washing to be washed is taken into consideration.

9. Method for dosing detergent according to claim 5 or 6, **characterised in that** when determining the additional/subsequent amount of detergent, the temperature of the washing liquid is taken into consideration.

10. Washing machine for accomplishing a method in accordance with at least one of claims 1 to 9, **characterised by** an apparatus (14; 15) for introducing a flow of air, at a bubble forming frequency which is changeable within a predetermined band range, into the washing liquid, and by a measuring device (16) for determining the pressure difference, when the bubble is destroyed, of the volume flow conducted into the washing liquid at different bubble forming frequencies according to the bubble pressure method, and by a control device (11) for determining a characteristic curve of surface tension values at different bubble forming frequencies as measurement for the concentration of the detergent in the aqueous washing liquid and consequently as criterion for a sufficient dosing of the detergent.

11. Washing machine according claim 10, **characterised by** a hopper (10) for the accommodating of the second detergent and by a dosing device (13), which is controllable by the control device (11) in dependence on the determined concentration of the detergent, for the introduction of the additional or respectively subsequent detergent out of the hopper (10) into the washing liquid bath (1).

**Revendications**

1. Procédé pour déterminer la concentration d'un produit détergent, contenant des tensioactifs ou des substances tensioactives, dans un liquide de lavage aqueux, par mesure de la tension de surface du liquide de lavage selon la méthode de pression de bulle,
   **caractérisé en ce que**
   la tension de surface est mesurée selon la méthode de pression de bulle, pour différentes fréquences de formation de bulles, d'où est déterminée une caractéristique de valeurs de tension de surface pour différentes fréquences de formation de bulles, à titre d'indication quantitative de la concentration du produit détergent dans le liquide de lavage aqueux, utilisée comme critère d'un dosage suffisant en produit détergent.

2. Procédé pour déterminer la concentration d'un produit détergent, selon la revendication 1, **caractérisé en ce que** l'on détermine un indice correspondant à la linéarité de la caractéristique tension de surface-fréquence de formation de bulles, cet indice servant d'indication quantitative de la concentration en produit détergent.

3. Procédé pour déterminer la concentration d'un produit détergent selon la revendication 2, **caractérisé en ce que** la caractéristique tension de surface-fréquence de formation de bulles est déterminée pour une fréquence de formation de bulles comprise entre 1 Hz et 10 Hz.

4. Procédé pour déterminer la concentration d'un produit détergent selon au moins l'une des revendications 2 à 3, **caractérisé en ce que**, avant la détermination de la caractéristique tension de surface-fréquence de formation de bulles, est effectué un étalonnage d'un dispositif de mesure (16), afin de déterminer la différence de pression au moment du déchirement ou éclatement de la bulle, du débit-volume passé dans le liquide de lavage, par introduction d'un flux gazeux à haute fréquence de formation de bulles, d'environ 20 Hz.

5. Procédé de dosage de produit détergent, contenant des tensioactifs ou des substances tensioactives, dans un liquide de lavage formé d'un mélange eau-produit détergent, se trouvant dans le récipient à lessive (1) d'une machine à laver, **caractérisé par** les étapes de procédé suivantes:

   • Détermination de la concentration en produit détergent selon au moins l'une des revendications 2 à 4, par détermination d'un indice correspondant à la linéarité de la caractéristique tension de surface-fréquence de formation de bulles;
   • Addition dosée d'une deuxième quantité, dépendante de cet indice, d'un produit détergent dans le liquide de lavage.

6. Procédé de dosage de produit détergent, selon la revendication 5,

**caractérisé en ce que**, après avoir effectué l'addition dosée de la deuxième quantité, sont prévus

   • une durée de mélange;
   • une nouvelle détermination de la concentration en produit détergent, selon au moins l'une des revendications 2 à 4, par détermination d'un indice correspondant à la linéarité de la caractéristique tension de surface-fréquence de formation de bulles;
   • et un redosage, dépendant de cet indice, d'une troisième quantité du produit détergent.

7. Procédé de dosage de produit détergent, selon au moins l'une des revendications 5 ou 6, **caractérisé en ce que** l'on utilise comme produit détergent, à ajouter ou à rajouter de façon dosée, un produit de lavage liquide.

8. Procédé de dosage de produit détergent, selon au moins l'une des revendications 5 à 7, **caractérisé en ce que** l'on prend en compte la quantité de linge à laver, lorsque l'on procède à la détermination de la quantité, à ajouter/à rajouter de façon dosée, de produit de lavage.

9. Procédé de dosage de produit détergent, selon la revendication 5 ou 6, **caractérisé en ce que** l'on prend en compte la température du liquide de lavage lors de la détermination de la quantité, à ajouter/à rajouter de façon dosée, de produit détergent.

10. Machine à laver pour la mise en oeuvre d'un procédé, selon au moins l'une des revendications 1 à 9, **caractérisée par** un dispositif (14 ; 15) pour introduire dans le liquide de lavage un flux d'air à une fréquence de formation de bulles, modifiable dans les limites d'une plage de bande prédéterminée, par un dispositif de mesure (16) pour déterminer la différence de pression, lors de l'éclatement de la bulle, du débit-volume guidé dans le liquide de lavage, pour différentes fréquences de formation de bulles, suivant la méthode de pression de bulle, et par un dispositif de commande (11) pour déterminer une caractéristique de valeurs de tension de surface pour différentes fréquences de formation de bulles, comme indication quantitative de la concentration du produit détergent dans le liquide de lavage aqueux et, ainsi, comme critère de la nature suffisante du dosage du produit détergent.

11. Machine à laver, selon la revendication 10, **caractérisée par** un réservoir de stockage (10), pour contenir le deuxième produit détergent, et par un dispositif de dosage (13), pouvant être commandé par le dispositif de commande (11), en fonction de la concentration déterminée en produit détergent, pour introduire le produit détergent à ajouter, respectivement à rajouter, de façon dosée, du réservoir de stockage (10) dans le réservoir à lessive (1).